# EUROPEAN PATENT APPLICATION

(11) **EP 4 274 264 A1**
(43) Date of publication of application: **08.11.2023**
(21) Application number: 21913832.8
(22) Date of filing: 09.12.2021
(51) Int. Cl.: H04W 4/02

(54) **POSITIONING METHOD AND DEVICE, AND COMPUTER READABLE STORAGE MEDIUM**

(30) Priority: 31.12.2020 CN 202011620018
(71) Applicant: Datang Mobile Communications Equipment Co., Ltd., Beijing 100085 (CN)
(72) Inventor: LI, Jianxiang, Beijing 100085 (CN); FU, Jing, Beijing 100085 (CN); QUAN, Haiyang, Beijing 100085 (CN); WANG, Da, Beijing 100085 (CN)
(74) Representative: Studio Torta S.p.A.
(86) International application number: PCT/CN2021/136892
(87) International publication number: WO 2022/143091

(57) **Abstract**

Embodiments of the present disclosure provide a positioning method, an equipment, and a computer-readable storage medium, and related to the technical field of communication. The method includes: receiving a first request, wherein the first request is configured to request position information of a positioned terminal; and simultaneously sending configuration information to the positioned terminal and a target terminal according to the first request, wherein the configuration information is configured to indicate the target terminal to send a positioning reference signal according to the configuration information, and to indicate the positioned terminal to receive the positioning reference signal according to the configuration information, the positioning reference signal is used to locate the positioned terminal.

## Description

### CROSS-REFERENCE OF RELATED APPLICATION

The present disclosure claims priority to Chinese patent application No. 202011620018.3, filed in China National Intellectual Property Administration (CNIPA) on Dec. 31, 2020, the entire disclosure of which is incorporated herein by reference.

### TECHNICAL FIELD

The present disclosure relates to the technical field of communication, and in particular to a positioning method, an equipment, and a computer-readable storage medium.

### BACKGROUND

Under the current 3GPP architecture, the scenario is not considered in which, when data is transmitted through Sidelink, terminals accessed to a base station can also supply positioning reference signals under coverage of the base station. With the current positioning technology, positioning reference signals sent by base stations covering outdoors cannot meet the positioning requirement of high accuracy, for example, there are few sites of base stations that send positioning reference signals, outdoor base stations are arranged by geometric correlation, resolutions of the positioning reference signals as sent are not so high, etc., all these greatly lower the accuracy of outdoor positioning results that are based on the cellular network. However, higher requirement is put on positioning accuracy under the Sidelink scenario, and the positioning accuracy requirement of Sidelink cannot be fully satisfied with the currently existing positioning architecture.

### SUMMARY

The present disclosure provides a positioning method, an equipment and a computer-readable storage medium capable of solving the problem in which the positioning accuracy requirement under the Sidelink scenario cannot be satisfied under the current positioning architecture. The technical solutions will be described below.

In a first aspect, there is provided a positioning method, performed by a core network equipment, the method includes:
receiving a first request, wherein the first request is configured to request position information of a terminal being positioned; and
sending configuration information to the terminal being positioned and a target terminal according to the first request, wherein the configuration information is configured to indicate the target terminal to send a positioning reference signal according to the configuration information, and to indicate the terminal being positioned to receive the positioning reference signal according to the configuration information, the positioning reference signal is used to locate the terminal being positioned.

In a possible mode of execution, sending configuration information to the terminal being positioned and a target terminal according to the first request includes:
determining the target terminal to send the positioning reference signal according to identification information of the terminal being positioned carried in the first request;
configuring configuration information for the target terminal; and
sending the configured configuration information to the terminal being positioned and the target terminal.

In another possible mode of execution, determining the target terminal to send the positioning reference signal according to identification information of the terminal being positioned carried in the first request includes:
determining a base station which the terminal being positioned served by according to the identification information of the terminal being positioned; and
determining terminal(s) served by the base station and terminal(s) served by a base station adjacent to the base station as the target terminals.

In still another possible mode of execution, before configuring configuration information for the target terminal, the method further includes:
selecting a terminal that supports sending positioning reference signals from the target terminals; and wherein
configuring configuration information for the target terminal includes:
   configuring configuration information for the terminal that supports sending positioning reference signals.

In yet another possible mode of execution, selecting a terminal that supports sending positioning reference signals from the target terminals includes:
sending a second request to the target terminals, wherein the second request is configured to enquire whether the target terminals support sending positioning reference signals; and
selecting the terminal that supports sending positioning reference signals from the target terminals according to identification information of the target terminals carried in a received feedback message.

In still yet another possible mode of execution, the feedback message further carries parameter information of the positioning reference signal sent by the target terminal, and configuring configuration information for the terminal that supports sending positioning reference signals includes:
configuring configuration information for the terminal that supports sending positioning reference signals according to the parameter information.

In another possible mode of execution, the parameter information includes at least one of the following: bandwidth, frequency information, or duration of the positioning reference signal sent by the target terminal.

In still another possible mode of execution, the method further includes:
selecting a terminal that supports sending positioning reference signals from the target terminals; and
sending identifier ID of the terminal that supports sending positioning reference signals to the terminal being positioned, so that the terminal being positioned receives the positioning reference signal sent by the terminal to which the identifier ID corresponds according to the configuration information.

In yet another possible mode of execution, the method further includes:
receiving a measurement result sent by the terminal being positioned and a first corresponding time stamp, wherein the measurement result includes: an arrival time difference between different positioning reference signals; corresponding positioning reference signal IDs;
determining at least one target terminal according to the positioning reference signal IDs to which the measurement result corresponds and the identification information of the target terminal;
obtaining geographical position information sent by the at least one target terminal and a corresponding time stamp; and
determining a geographical position of the terminal being positioned according to the measurement result and the corresponding time stamp, and the geographical position information and the corresponding time stamp.

In still yet another possible mode of execution, obtaining geographical position information sent by the at least one target terminal and a corresponding time stamp includes:
selecting geographical position information and a corresponding time stamp of the at least one of target terminal from geographical position information and corresponding time stamps sent by the target terminals as received according to the identification information of the at least one target terminal;
   or,
sending a third request to the at least one target terminal, wherein the third request is configured to request geographical position information of the at least one target terminal; and
receiving geographical position information and a corresponding time stamp sent by the at least one target terminal.

In another possible mode of execution, the method further includes:
receiving geographical position sent by the terminal being positioned, wherein the geographical position is obtained by the terminal being positioned via performing positioning according to the received positioning reference signal.

In still another possible mode of execution, the configuration information includes at least one of the following:
a sending pattern of the positioning reference signal;
indication information of time domain resource, frequency domain resource, or space domain resource of the positioning reference signal; or
identifier ID of each terminal that sends the positioning reference signal;
wherein the sending pattern includes periodical, semi-continual, or non-periodical;
indication information of time domain resource of a semi-continual positioning reference signal is configured to indicate a time point of starting to send, duration, interval period to send of the positioning reference signal, or a time point of starting to send, a time point of ending to send, or interval period to send of the positioning reference signal;
indication information of time domain resource of a periodical positioning reference signal is configured to indicate a sending period of the positioning reference signal; or,
indication information of time domain resource of a non-periodical positioning reference signal is configured to indicate a time point of starting to send, duration, or a time point of ending to send of the positioning reference signal.

In a second aspect, there is provided a positioning method, performed by a core network equipment, the method includes:
sending preset configuration information to target terminals, wherein the configuration information is configured to indicate the target terminals to send a positioning reference signal according to the configuration information;
receiving a first request, wherein the first request is configured to request position information of a terminal being positioned; and
sending the configuration information to the terminal being positioned according to the first request, wherein the configuration information is configured to indicate the terminal being positioned to receive the positioning reference signal according to the configuration information, the positioning reference signal is used to locate the terminal being positioned.

In a possible mode of execution, the method further includes:
selecting a terminal that supports sending positioning reference signals from the target terminals; and
sending identifier ID of the terminal that supports sending positioning reference signals to the terminal being positioned.

In another possible mode of execution, selecting a terminal that supports sending positioning reference signals from the target terminals includes:
sending a second request to the target terminals, wherein the second request is configured to enquire whether the target terminals support sending positioning reference signals; and
selecting the terminal that supports sending positioning reference signals from the target terminals according to identification information of the target terminals carried in a feedback message of the target terminals as received.

In a third aspect, there is provided a positioning method, performed by a terminal being positioned, the method includes:
receiving configuration information sent by a core network equipment;
receiving positioning reference signals sent by a plurality of transmitting ends according to the configuration information, wherein the plurality of transmitting ends include target terminals and a base station which the target terminals served by; and
positioning according to the positioning reference signals.

In a possible mode of execution, positioning according to the positioning reference signals includes:
measuring arrival time differences between different positioning reference signals sent by the various transmitting ends; and
determining geographical position according to the arrival time differences and corresponding time stamps, and geographical position information, speed information and corresponding time stamps of the plurality of transmitting ends as received from the core network equipment.

In another possible mode of execution, before determining geographical position according to the arrival time differences and corresponding time stamps, and geographical position information, speed information and corresponding time stamps of the plurality of transmitting ends as received from the core network equipment, the method further includes:
obtaining a calibration parameter; and wherein
determining geographical position according to the arrival time differences and corresponding time stamps, and geographical position information, speed information and corresponding time stamps of the plurality of transmitting ends as received from the core network equipment includes:
   performing a calibrating process on the time stamps to which the arrival time differences correspond according to the calibration parameter; and
   determining geographical position according to the arrival time differences, geographical position information, speed information and corresponding time stamps of the various transmitting ends, and the calibrated time stamps to which the arrival time differences correspond.

In still another possible mode of execution, obtaining a calibration parameter includes:
obtaining first time stamps as received when the plurality of transmitting ends send the positioning reference signals, second time stamps when the plurality of transmitting ends send the positioning reference signals, and a third time stamp when the position calculation is performed for the terminal being positioned; and
determining the calibration parameter according to the first time stamps, the second time stamps, and the third time stamp.

In still yet another possible mode of execution, determining geographical position according to the arrival time differences and corresponding time stamps, and geographical position information, speed information and corresponding time stamps of the plurality of transmitting ends as received from the core network equipment includes:
determining moving transmitting ends according to the speed information of the various transmitting ends, and/or according to geographical position information of adjacent timing of the various transmitting ends;
removing arrival time differences to which the moving transmitting ends correspond from the arrival time differences; and
determining geographical position according to the remaining arrival time differences and corresponding time stamps, and geographical position information and corresponding time stamps of corresponding transmitting ends.

In another possible mode of execution, before receiving positioning reference signals sent by a plurality of transmitting ends according to the configuration information, the method further includes:
receiving identifier ID of a terminal that supports sending positioning reference signals as sent by the core network equipment; then
receiving positioning reference signals sent by a plurality of transmitting ends according to the configuration information includes:
receiving the positioning reference signal sent by the terminal to which the identifier ID corresponds according to the configuration information.

In still another possible mode of execution, the method further includes: sending the geographical position to the core network equipment.

In yet still another possible mode of execution, positioning according to the positioning reference signal includes:
measuring arrival time differences between the positioning reference signals sent by the various transmitting ends; and
sending a measurement result and a corresponding time stamp to the core network equipment, so as to facilitate the core network equipment to determine the geographical position of the terminal being positioned, wherein the measurement result includes arrival time differences between different positioning reference signals and corresponding positioning reference signal IDs.

In yet another possible mode of execution, the configuration information includes at least one of the following:
a sending pattern of the positioning reference signal;
indication information of time domain resource, frequency domain resource, or space domain resource of the positioning reference signal; or
identifier ID of each terminal that sends the positioning reference signal; wherein
the sending pattern includes periodical, semi-continual, or non-periodical;
indication information of time domain resource of a semi-continual positioning reference signal is configured to indicate a time point of starting to send, duration, and interval period to send of the positioning reference signal, or a time point of starting to send, a time point of ending to send, and interval period to send of the positioning reference signal;
indication information of time domain resource of a periodical positioning reference signal is configured to indicate a sending period of the positioning reference signal; and
indication information of time domain resource of a non-periodical positioning reference signal is configured to indicate a time point of starting to send, duration, and a time point of ending to send of the positioning reference signal.

In a fourth aspect, there is provided a core network equipment, including:
a memory, configured to store a computer program;
a transceiver, configured to receive a first request under control of a processor, wherein the first request is configured to request position information of a terminal being positioned, and to send configuration information to the terminal being positioned and target terminals according to the first request, wherein the configuration information is configured to indicate the target terminals to send positioning reference signals according to the configuration information, and to indicate the terminal being positioned to receive the positioning reference signals according to the configuration information, the positioning reference signal is used to locate the terminal being positioned; and
a processor, configured to read the computer program in the memory and to perform control of the transceiver.

In a possible mode of execution, the processor is specifically configured to determine target terminals that send the positioning reference signals according to identification information of the terminal being positioned carried in the first request, and to configure configuration information for the target terminals; and
the transceiver is specifically configured to send configured configuration information to the terminal being positioned and the target terminals under control of the processor.

In another possible mode of execution, the processor is specifically configured to determine a base station which the terminal being positioned served by according to identification information of the terminal being positioned, and to determine terminals served by the base station and terminals served by a base station adjacent to the base station as the target terminals.

In still another possible mode of execution, the processor is specifically configured to select a terminal that supports sending positioning reference signals from the target terminals, and to configure configuration information for the terminal that supports sending positioning reference signals.

In a fifth aspect, there is provided a core network equipment, including:
a memory, configured to store a computer program;
a transceiver, configured to send preset configuration information to target terminals under control of a processor, wherein the configuration information is configured to indicate the target terminals to send positioning reference signals according to the configuration information,
to receive a first request, wherein the first request is configured to request position information of a terminal being positioned, and
to send the configuration information to the terminal being positioned according to the first request, wherein the configuration information is configured to indicate the terminal being positioned to receive the positioning reference signal according to the configuration information, the positioning reference signal is used to locate the terminal being positioned; and
a processor, configured to read the computer program in the memory and to perform control of the transceiver.

In a sixth aspect, there is provided a terminal, including:
a memory, configured to store a computer program;
a transceiver, configured to receive configuration information sent by a core network equipment under control of a processor, and to receive positioning reference signals sent by a plurality of transmitting ends according to the configuration information, wherein the plurality of transmitting ends include target terminals and a base station which the target terminals served by; and
the processor, configured to read the computer program in the memory and to perform control of the transceiver, and to position according to the positioning reference signals received by the transceiver.

In a possible mode of execution, the processor is specifically configured to measure arrival time differences between different positioning reference signals sent by various transmitting ends; and
to determine geographical position according to the arrival time differences and corresponding time stamps, and geographical position information, speed information and corresponding time stamps of the plurality of transmitting ends as received from the core network equipment.

In another possible mode of execution, the processor is specifically configured to measure arrival time differences between different positioning reference signals sent by various transmitting ends; and
the transceiver is further configured to send a measurement result and corresponding time stamps to the core network equipment, so that the core network equipment determines geographical position of the terminal being positioned, wherein the measurement result includes arrival time differences between the positioning reference signals and corresponding positioning reference signal IDs.

In a seventh aspect, there is provided a core network equipment, including:
a receiving unit, configured to receive a first request, wherein the first request is configured to request position information of a terminal being positioned; and
a sending unit, configured to send configuration information to the terminal being positioned and target terminals, wherein the configuration information is configured to indicate the target terminals to send positioning reference signals according to the configuration information, and to indicate the terminal being positioned to receive the positioning reference signals according to the configuration information, the positioning reference signal is used to locate the terminal being positioned.

In an eighth aspect, there is provided a core network equipment, including:
a sending unit, configured to send preset configuration information to target terminals, wherein the configuration information is configured to indicate the target terminals to send positioning reference signals according to the configuration information; and
a receiving unit, configured to receive a first request, wherein the first request is configured to request position information of a terminal being positioned; and wherein
the sending unit is further configured to send the configuration information to the terminal being positioned according to the first request, wherein the configuration information is configured to indicate the terminal being positioned to receive the positioning reference signals according to the configuration information, the positioning reference signal is used to locate the terminal being positioned.

In a ninth aspect, there is provided a terminal, including:
a receiving unit, configured to receive configuration information sent by a core network equipment, and to receive positioning reference signals sent by a plurality of transmitting ends according to the configuration information, wherein the plurality of transmitting ends include target terminals and a base station which the target terminals served by; and
a positioning unit, configured to position a terminal being positioned according to the positioning reference signals.

In a tenth aspect, there is provided a processor readable storage medium, the processor readable storage medium storing thereon a computer program that enables a processor to execute corresponding operations of the positioning method as shown by the first aspect, or to execute corresponding operations of the positioning method as shown by the second aspect, or to execute corresponding operations of the positioning method as shown by the third aspect.

### BRIEF DESCRIPTION OF THE DRAWINGS

I In order to explain the technical solutions in the embodiments of the present disclosure more clearly, the drawings used in the description of the embodiments of the present disclosure will be briefly illustrated below.
Fig. 1 is view showing a positioning framework of the related art;
Fig. 2 is a view schematically illustrating Sidelink communication process in the related art;
Fig. 3 is a flowchart schematically illustrating the positioning method provided by an embodiment of the present disclosure;
Fig. 4 is a flowchart schematically illustrating the positioning method provided by another embodiment of the present disclosure;
Fig. 5 is a flowchart schematically illustrating the positioning method provided by still another embodiment of the present disclosure;
Fig. 6 is a view schematically illustrating interaction of the positioning method provided by an embodiment of the present disclosure;
Fig. 7 is a view schematically illustrating interaction of the positioning method provided by another embodiment of the present disclosure;
Fig. 8 is a view schematically illustrating interaction of the positioning method provided by still another embodiment of the present disclosure;
Fig. 9 is a view schematically illustrating the structure of the core network equipment provided by an embodiment of the present disclosure; and
Fig. 10 is a view schematically illustrating the structure of the terminal equipment provided by an embodiment of the present disclosure.

### DETAILED DESCRIPTION

The embodiments of the present disclosure are described in detail below, and the examples of the embodiments are illustrated in the drawings, where throughout the drawings, the same or similar reference numbers are used to depict the same or similar elements or elements having the same or similar functions. The embodiments described below with reference to the accompanying drawings are illustrative, and are only used to explain the present disclosure, rather than being construed as limiting the present disclosure.

As can be understood by persons skilled in the art, unless otherwise expressed, the singular forms of "a", "one", "the" and "said" can also subsume the plural forms. As should be further understood, the wordings of "including", "including" and "containing" as used in the Description of the present disclosure mean the existence of the features, integers, steps, operations, elements and/or components, but do not exclude the existence or addition of one or more other feature(s), integer(s), step(s), operation(s), element(s), component(s) and/or their combinations. As should be understood, when we say one element as being "connected to" or "coupled with" another element, it can be directly connected to or coupled with the other element, or there may be an intermediate element therebetween. In addition, the "connected to" or "coupled with" as used here can subsume wireless connection or wireless coupling. The expression "and/or" as used here includes the entirety of one or more correlatively listed items or anyone unit and entire combination thereof.

To make more lucid and clear the objectives, technical solutions and advantages of the present disclosure, the embodiments of the present disclosure will be described in greater detail below in conjunction with the accompanying drawings.

The technical solutions provided by the embodiments of the present disclosure are applicable to many systems, particularly the 5G system. For instance, the applicable system can be the global system of mobile communication (GSM) system, the code division multiple access (CDMA) system, the wideband code division multiple access (WCDMA) system, the general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the worldwide interoperability for microwave access (WiMAX) system, and the 5G new radio (NR) system, etc. These many systems all include terminal equipment and network side equipment. The system can further include core network parts, such as the evolved packet system (EPS), and 5G system (5GS), etc.

Several nouns involved in the present disclosure are firstly introduced and explained.

The terminal equipment involved in the embodiments of the present disclosure can be an equipment directing to the user to provide voice and/or data connectivity, a handheld equipment having wireless connection function, and such other processing equipment as being connected to a wireless modem, etc. In different systems, the name of the terminal equipment may also be different, for instance, in a 5G system, the terminal equipment can be a user equipment (UE). The wireless terminal equipment can be communicative with one or more core network(s) (CNs) through a radio access network (RAN), the wireless terminal equipment can be mobile terminal equipment, such as a mobile phone (also referred to as a "cell" phone) and a computer having mobile terminal equipment, such as portable, mini, handheld, in-built in the computer, or on-board mobile devices, and they exchange language and/or data with the radio access network, for instance, such equipment as a personal communication service (PCS) phone, a wireless phone, a session initiated protocol (SIP) telephone, a wireless local loop (WLL), a personal digital assistant (PDA), etc. The wireless terminal equipment can also be a system, a subscriber unit, a subscriber station, a mobile station, a mobile, a remote station, an access point, a remote terminal, an access terminal, a user remote terminal, a user agent, and a user device, to which no restriction is made in the present disclosure.

The network side equipment involved in the embodiments of the present disclosure can be a base station, the base station can include a plurality of cells providing services to terminals. According to differences in specific disclosure scenarios, the base station can as well be an access point, or can be an equipment that is accessed to the network and communicates with a wireless terminal equipment through one or more sector(s) on the radio interface, or can be any other name. The network side equipment can be configured to interchange received radio frames with internet protocol (IP) packets, and serves as a router between the wireless terminal equipment and other parts accessed to the network, and the other parts accessed to the network can include the internet protocol (IP) communication network. The network side equipment can further coordinate property management of the radio interface. For instance, the network side equipment involved in the embodiments of the present disclosure can be a network side equipment of base transceiver station (BTS) in the global system for mobile communications (GSM) or the code division multiple access (CDMA), can also be a network side equipment (NodeB) in the wide-band code division multiple access (WCDMA), can further be an evolutional network side equipment (evolutional Node B, eNB or e-NodeB) in a long term evolution (LTE) system, a 5GH base station (gNB) in the 5G network architecture (next generation system), and can also be a home evolved Node B (HeNB), a relay node, a femto, a pico, etc., to which no restriction is made in the embodiments of the present disclosure. In some network structures, the network side equipment can include centralized unit nodes and distributed unit node, and the centralized units and the distributed units can be arranged in geographical separation.

The network side equipment and the terminal equipment can respectively use one or more antenna(e) to perform multi input multi output (MIMO) transmission, and the MIMO transmission can be either single user MIMO or multiple user MIMO. According to the states and numbers of the antennae, MIMO transmission can be 2D-MIMO, 3D-MIMO, FD-MIMO or massive-MIMO, and can also be diversity transmission or preprogrammed transmission, or beamforming transmission.

The core network equipment involved in the embodiments of the present disclosure can be a management target equipment with location management function (LMF), i.e., a positioning physical or logical entity of a positioned wireless equipment, in a control plane architecture referred to as evolved service motion location center (E-SMLC), is responsible for selecting the positioning method and triggering positioning measurement, and can calculate the positioning final result and accuracy.

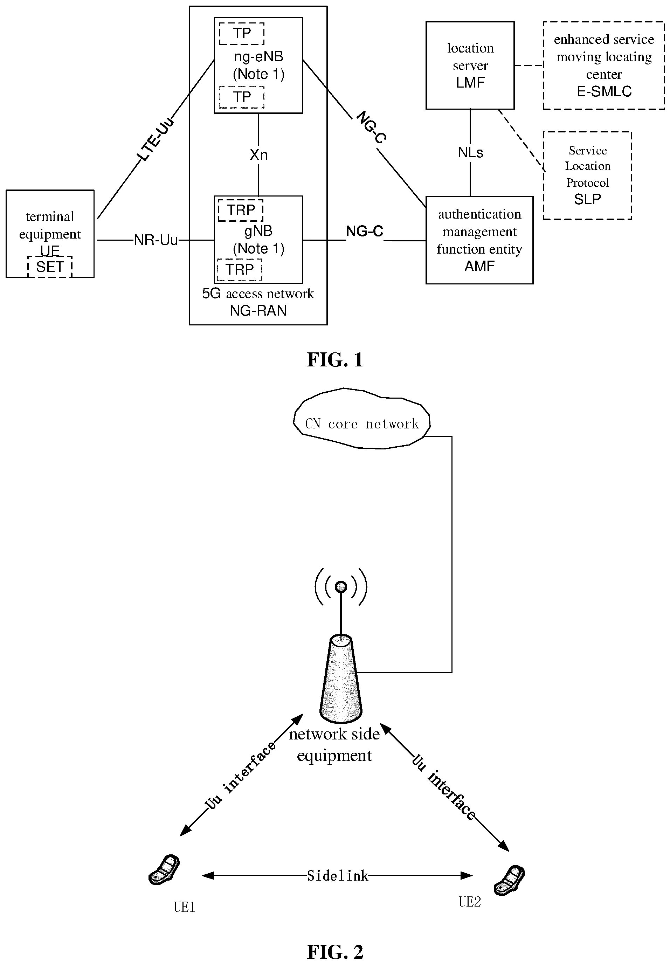

The positioning framework currently applicable for the 5G access network NG-RAN is as shown in Fig. 1, in which NG-RAN can send positioning reference signals, or perform positioning measurement based on auxiliary information; the terminal equipment UE can send positioning reference signals, or perform positioning measure based on auxiliary information, and can also calculate the positioning final result and accuracy on the basis of the measurement result.

The positioning capability in the long term evolution (LTE) positioning protocol (LPP) includes positioning methods supported by the target equipment, different aspects supported by a certain positioning method (such as supported auxiliary global navigation satellite system A-GNSS auxiliary data type) and some positioning common properties (such as the capability to process plural LPP events) not restricted to a certain positioning method.

The LPP positioning capability to transfer events may be triggered by server request, specifically, the server sends an LPP request capability message, requesting the relevant positioning capability of the target equipment; alternatively, the target equipment "reports on its own initiative", specifically, the target equipment transmits relevant positioning capability to the server, so as to initiatively transmit capability information, the capability information may contain specific positioning methods and some commonalities of positioning methods, etc. The server can be an LMF in a 5G positioning framework.

Direct communication means the mode whereby the adjacent terminal can perform data transmission over a close distance range through a direct communication link (also referred to as Sidelink). The wireless interface to which the Sidelink corresponds is referred to as a direct communication interface, also referred to as a Sidelink interface, as shown in Fig. 2.

Accordingly, under the current 3GPP architecture, the scenario is not considered in which, when data is transmitted through Sidelink, terminals accessed to a base station can also supply positioning reference signals under coverage of the base station. With the current positioning technology, positioning reference signals sent by base stations covering outdoors cannot meet the positioning requirement of high accuracy, for example, there are few sites of base stations that send positioning reference signals, outdoor base stations are arranged by geometric correlation, resolutions of the positioning reference signals as sent are not so high, etc., all these greatly lower the accuracy of outdoor positioning results that are based on the cellular network. However, higher requirement is put on positioning accuracy under the Sidelink scenario, and the positioning accuracy requirement of Sidelink cannot be fully satisfied with the currently existing positioning architecture.

In view of the above, the present disclosure provides a positioning method, an equipment, and a processor readable storage medium that aim to solve the aforementioned technical problems in the state of the art.

Specifically speaking, an embodiment of the present disclosure provides a positioning method, whereby not only the base station can send positioning reference signals, but some terminals served by the base station (some terminals accessed to the base station under coverage of the base station) can also send positioning reference signals through PC5 interface, so that density of positioning reference signals in the network as well as irrelevancy of geometric distribution of the sent positioning signals are enhanced, and positioning accuracy of the terminal being positioned is hence enhanced. The base station reports the positioning reference signal resource pool to the LMF server, the LMF dispatches PC5 PRS configuration to the terminal being positioned and target terminals, informing the target terminals that PRS signals and corresponding resource configuration can be broadcast at the PC5 interface, and informing the terminal being positioned that the resource configuration of the PRS signals can be received at the PC5 interface. Thus, the target terminals obtain the configuration of PC5 PRS, and can then send positioning reference signals according to requirement, so that the terminal being positioned can receive more positioning reference signals.

Detailed explanation is made below with specific embodiments to explain the technical solutions of the present disclosure and how the technical solutions of the present disclosure solve the aforementioned technical problems. The specific embodiments below can be combined with one another, and identical or similar concepts or processes may not be redundantly described in certain embodiments. The embodiments of the present disclosure are described below in conjunction with the accompanying drawings.

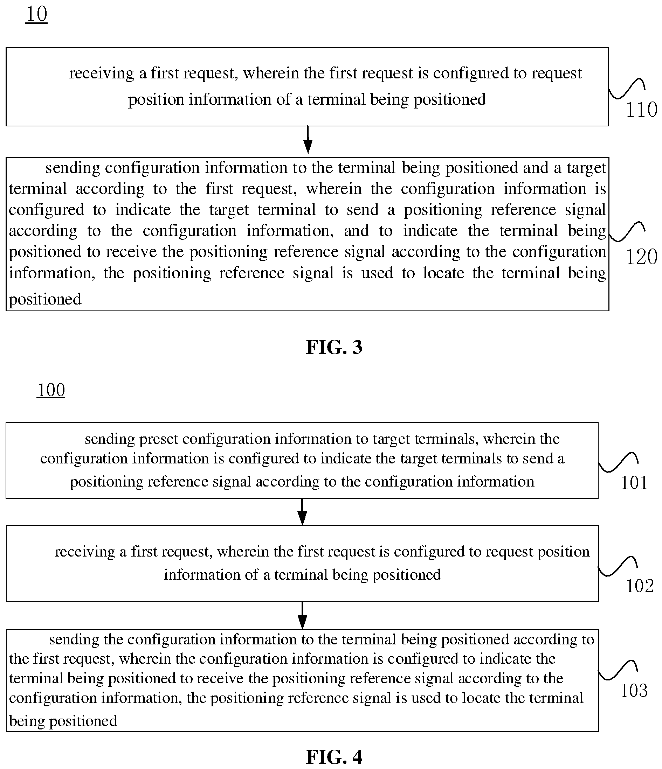

An embodiment of the present disclosure provides a positioning method 10, as shown in Fig. 3, the method 10 is performed by a core network equipment, such as performed by a positioning server LMF, and the method includes:
110 - receiving a first request, wherein the first request is configured to request position information of a terminal being positioned; and
120 - sending configuration information to the terminal being positioned and a target terminal according to the first request, wherein the configuration information is configured to indicate the target terminal to send a positioning reference signal according to the configuration information, and to indicate the terminal being positioned to receive the positioning reference signal according to the configuration information, the positioning reference signal is used to locate the terminal being positioned.

Specifically, in this embodiment, the first request received by the LMF can be a positioning service request coming from a positioning terminal, and the configuration information can include, but is not limited to include, at least one of the following:
a sending pattern of the positioning reference signal;
indication information of time domain resource, frequency domain resource, or space domain resource of the positioning reference signal; or
identifier ID of each terminal that sends the positioning reference signal.

The sending pattern includes periodical, semi-continual, or non-periodical.

Indication information of time domain resource of a semi-continual positioning reference signal is configured to indicate a time point of starting to send, duration, and interval period to send of the positioning reference signal, or a time point of starting to send, a time point of ending to send, and interval period to send of the positioning reference signal.

Indication information of time domain resource of a periodical positioning reference signal is configured to indicate a sending period of the positioning reference signal.

Indication information of time domain resource of a non-periodical positioning reference signal is configured to indicate a time point of starting to send, duration, and a time point of ending to send of the positioning reference signal.

In the above embodiment, after the LMF has received the first request that requests the position information of the terminal being positioned, it dispatches PC5 PRS configuration to the terminal being positioned and the target terminal, informing the target terminal that PRS signals and corresponding resource configuration can be broadcast at the PC5 interface, and informing the terminal being positioned that the resource configuration of the PRS signals can be received at the PC5 interface. Thus, the target terminal obtains the configuration of PC5 PRS, and can then send positioning reference signals according to requirement, so that the terminal being positioned can receive more positioning reference signals.

Accordingly, by the positioning method provided by the embodiments of the present disclosure, not only the base station can send positioning reference signals, but some terminals served by the base station can also send positioning reference signals through PC5 interface, so that density of positioning reference signals in the network as well as irrelevancy of geometric distribution of the sent positioning signals are enhanced, and positioning accuracy of the terminal being positioned is hence enhanced, whereby the positioning accuracy requirement under the Sidelink scenario can be satisfied.

As should be understood, in this embodiment, the target terminal can send the positioning reference signal through the PC5 interface on the resource indicated by the configuration information. LMF can send the configuration information to the terminal being positioned through an LPP message.

In some embodiments, step 120 can include:
121 - determining the target terminal to send the positioning reference signal according to identification information of the terminal being positioned carried in the first request;
122 - configuring configuration information for the target terminal; and
123 - sending the configured configuration information to the terminal being positioned and the target terminal.

Specifically, in this embodiment, step 121 can include:
determining a base station which the terminal being positioned served by according to the identification information of the terminal being positioned; and
determining terminal(s) served by the base station and terminal(s) served by a base station adjacent to the base station as the target terminals.

In other words, in this embodiment, after the core network equipment has received the first request sent by the positioning terminal (the positioning terminal is a terminal that requests the geographical position of the terminal being positioned), the base station which the terminal being positioned served by can be obtained by searching the database on the basis of the identification information of the terminal being positioned carried in the first request, and the terminals served by the base station and terminals served by a base station adjacent to the base station are determined as target terminals, thereafter, after configuration information has been configured for the target terminals, the well configured configuration information is sent to the terminal being positioned and the target terminals, the target terminals send positioning reference signals according to the received configuration information, and the terminal being positioned receives the positioning reference signals sent by the target terminals according to the received configuration information, the positioning reference signal is used to locate the terminal being positioned.

In some embodiments, before step 122, step 120 can further include:
124 - selecting terminals that support sending the positioning reference signals from the target terminals.

Then, step 123 includes configuring configuration information for the terminals that support sending the positioning reference signals.

Specifically, in this embodiment, step 124 can specifically include:
sending a second request to the target terminals, wherein the second request is configured to enquire whether the target terminals support sending positioning reference signals; and
selecting the terminal that supports sending positioning reference signals from the target terminals according to identification information of the target terminals carried in a feedback message of the target terminals as received.

The feedback message further carries parameter information of the positioning reference signals sent by the target terminals, then step 123 is specifically:
configuring configuration information for the terminal that supports sending positioning reference signals according to the parameter information.

In this embodiment, the parameter information includes at least one of the following: bandwidth, frequency information, or duration of the positioning reference signal sent by the target terminal.

In other words, in order to enhance the efficiency of sending the positioning reference signal PRS and the avoid wastage of the resource, after the target terminals have been determined on the basis of the identification information of the terminal being positioned carried in the request, terminals having capability to send PRS can be selected therefrom, and these terminals are thereafter configured with corresponding PRS resources on the basis of their specific capabilities.

An embodiment of the present disclosure further provides a positioning method 100, as shown in Fig. 4, the method 100 is performed by a core network equipment, such as performed by a positioning server LMF, and the method 100 includes:
101 - sending preset configuration information to target terminals, wherein the configuration information is configured to indicate the target terminals to send a positioning reference signal according to the configuration information;
102 - receiving a first request, wherein the first request is configured to request position information of a terminal being positioned; and
103 - sending the configuration information to the terminal being positioned according to the first request, wherein the configuration information is configured to indicate the terminal being positioned to receive the positioning reference signal according to the configuration information, the positioning reference signal is used to locate the terminal being positioned.

In other words, before the first request is received, configuration information for sending PRS can be configured in advance for the terminals of the entire network, for instance, identical PRS resource is configured for the terminals of the entire network, so that the terminals can be urged to timely send PRSs upon reception of the first request. Moreover, preset configuration information is sent to the terminals of the entire network through the mode of broadcasting a message, and the specific mode of implementation here can include that the LMF directly sends the configuration information through an LPP message to various terminals; alternatively, the LMF sends the configuration information to the base station, and the base station sends the same to various terminals through a broadcasting message.

In some embodiments, the positioning method 100 can further include:
104 - selecting a terminal that supports sending positioning reference signals from the target terminals; and
105 - sending identifier ID of the terminal that supports sending positioning reference signals to the terminal being positioned, so that the terminal being positioned receive the positioning reference signal sent by the terminal to which the identifier ID corresponds according to the configuration information.

Specifically, in this embodiment, step 104 can include:
sending a second request to the target terminals, wherein the second request is configured to enquire whether the target terminals support sending positioning reference signals; and
selecting the terminal that supports sending positioning reference signals from the target terminals according to identification information of the target terminals carried in a feedback message of the target terminals as received.

In other words, in this embodiment, since it is not determined which terminals possess the capability to send PRSs and which terminals do not possess the capability to send PRSs, and since it is also not determined what specific capabilities are possessed by the terminals that possess the capability to send PRSs, it is therefore required to enquire whether the target terminals possess auxiliary positioning capability, to select therefrom the terminals that support sending the positioning reference signals, and to send the identifier IDs of these terminals to the terminal being positioned, so that the terminal being positioned receives the positioning reference signals sent by the terminals to which the identifier IDs correspond according to the configuration information, so as to avoid resource wastage.

In some embodiments, the positioning method 10 and/or positioning method 100 can further include:
130 - receiving a measurement result sent by the terminal being positioned and a corresponding time stamp, wherein the measurement result includes an arrival time difference between different positioning reference signals; corresponding positioning reference signal IDs;
140 - determining at least one target terminal according to the positioning reference signal IDs to which the measurement result corresponds and the identification information of the target terminal;
150 - obtaining geographical position information sent by the at least one target terminal and a corresponding time stamp; and
160 - determining a geographical position of the terminal being positioned according to the measurement result and the corresponding time stamp, and the geographical position information and the corresponding time stamp.

Specifically, in this embodiment, step 150 can include:
151 - selecting geographical position information and a corresponding time stamp of the at least one target terminal from geographical position information and corresponding time stamps sent by the target terminals as received according to the identification information of the at least one target terminal;
   or,
152 - sending a third request to the at least one target terminal, wherein the third request is configured to request geographical position information of the at least one target terminal; and
153 - receiving geographical position information sent by the at least one target terminal and a corresponding time stamp.

Specifically, in this embodiment, the LMF can determine target terminals to which positioning reference signal IDs correspond according to the identification information of the target terminals and positioning reference signal IDs to which the received measurement result corresponds, and thereafter obtain the geographical position of the terminal being positioned according to the arrival time difference between the received positioning reference signals and the corresponding time stamp, and the determined geographical position information and corresponding time stamp of the target terminal.

As should be noted, in this embodiment, having obtained the above information, the LMF can employ the currently existing calculating method to obtain the geographical position of the terminal being positioned. For the sake of brevity, this is not redundantly described in this context.

In some other embodiments, the positioning method 10 and/or positioning method 100 can further include:
receiving geographical position sent by the terminal being positioned, wherein the sent geographical position is obtained by the terminal being positioned via performing positioning according to the received positioning reference signal.

Specifically, in this embodiment, the LMF can directly receive the geographical position sent by the terminal being positioned, while it is not required to perform positioning calculation to determine the geographical position of the terminal being positioned.

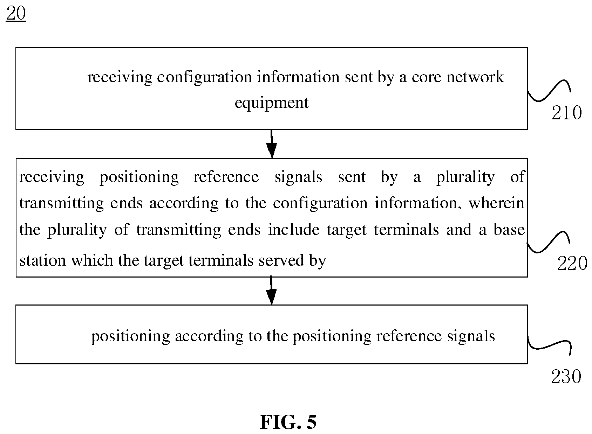

Based on the same inventive conception, an embodiment of the present disclosure further provides a positioning method 20, as shown in Fig. 5, the method 20 can be performed by a terminal being positioned in a positioning process, and the method includes:
210 - receiving configuration information sent by a core network equipment;
220 - receiving positioning reference signals sent by a plurality of transmitting ends according to the configuration information, wherein the plurality of transmitting ends include target terminals and a base station which the target terminals served by; and
230 - positioning according to the positioning reference signals.

Specifically, in this embodiment, the configuration information can include, but is not limited to include, at least one of the following:
a sending pattern of the positioning reference signal;
indication information of time domain resource, frequency domain resource, or space domain resource of the positioning reference signal; or
identifier ID of each terminal that sends the positioning reference signal.

The sending pattern includes periodical, semi-continual, or non-periodical.

Indication information of time domain resource of a semi-continual positioning reference signal is configured to indicate a time point of starting to send, duration, or interval period to send of the positioning reference signal, or a time point of starting to send, a time point of ending to send, or interval period to send of the positioning reference signal.

Indication information of time domain resource of a periodical positioning reference signal is configured to indicate a sending period of the positioning reference signal.

Indication information of time domain resource of a non-periodical positioning reference signal is configured to indicate a time point of starting to send, duration, and a time point of ending to send of the positioning reference signal.

In this embodiment, the terminal being positioned receives PC5 PRS configuration dispatched by the LMF, and learns to receive resource configuration of the PRS signal at the PC5 interface, thusly, not only the positioning reference signals sent by the base station can be received, but also the positioning reference signals sent by some terminals served by the base station can also be received through the PC5 interface according to configuration, whereby more positioning reference signals can be received, so that density of positioning reference signals in the network as well as irrelevancy of geometric distribution of the sent positioning signals are enhanced, and positioning accuracy of the terminal being positioned is hence enhanced, whereby the positioning accuracy requirement under the Sidelink scenario can be satisfied.

As should be understood, in this embodiment, the terminal being positioned can obtain the configuration information by receiving the LPP message sent by the LMF, so as to receive the corresponding positioning reference signal on the resource indicated by the configuration information.

In some embodiments, step 230 may include:
231 - measuring arrival time differences between different positioning reference signals sent by the various transmitting ends; and
232 - determining geographical position according to the arrival time differences and corresponding time stamps, and geographical position information, speed information and corresponding time stamps of the plurality of transmitting ends as received from the core network equipment.

Specifically, in this embodiment, the terminal being positioned can determine its own geographical position on the basis of the arrival time differences between different positioning reference signals transmitted by the plurality of transmitting ends and corresponding time stamps as measured and obtained, and geographical position information, speed information and corresponding time stamps of the plurality of transmitting ends as received from the core network equipment, while it is not required to send the relevant information to the LMF to be performed with positioning calculation thereby.

In some embodiments, before step 232, step 230 can further include:
240 - obtaining a calibration parameter.

Then, step 232 can include:
performing a calibrating process on the time stamps to which the arrival time differences correspond according to the calibration parameter; and
determining geographical position according to the arrival time differences, geographical position information, speed information and corresponding time stamps of the various transmitting ends, and the calibrated time stamps to which the arrival time differences correspond.

In other words, in this embodiment, in order to make the obtained geographical position more accurate, the mode of possibly existing time difference in the calibrating and positioning process can be employed.

Specifically, in this embodiment, step 240 can include:
obtaining first time stamps as received when the plurality of transmitting ends send the positioning reference signals, second time stamps when the plurality of transmitting ends send the positioning reference signals, and a third time stamp when the position calculation is performed for the terminal being positioned; and
determining the calibration parameter according to the first time stamps, the second time stamps, and the third time stamp.

Specifically, in this embodiment, it is required to calibrate two types of possibly existing time differences, one type is brought about by the terminal being positioned itself, for instance, once there is time difference between the time points of the positioning reference signals sent by the plurality of transmitting ends as received and the time point for positioning calculation, it is required to calibrate the time point for positioning calculation; the other type is brought about by the network, for instance, the times of the positioning reference signals sent by the plurality of transmitting ends are not synchronous, then there must be error in the arrival time differences between the positioning reference signals sent by the various transmitting ends, and this is also required to be calibrated.

In some other embodiments, step 232 can include:
determining moving transmitting ends according to the speed information of the various transmitting ends, and/or according to geographical position information of adjacent timing of the various transmitting ends;
removing arrival time differences to which the moving transmitting ends correspond from the arrival time differences; and
determining geographical position according to the remaining arrival time differences and corresponding time stamps, and geographical position information and corresponding time stamps of corresponding transmitting ends.

In other words, in this embodiment, in order to make the obtained geographical position more accurate, the mode of removing information (including arrival time differences and corresponding time stamps, and geographical position information and corresponding time stamps) to which moving terminals correspond can be employed. Since the factors that might cause error in the positioning result are removed during positioning calculation, the positioning accuracy can be enhanced.

As should be noted, in this embodiment, when geographical position is determined according to the remaining arrival time differences and corresponding time stamps, and geographical position information and corresponding time stamps of corresponding transmitting ends, it is also possible to firstly perform a calibrating process on the remaining arrival time differences and corresponding time stamps according to the obtained calibration parameter, and then to perform positioning calculation to obtain the geographical position of the terminal being positioned. Through thus a process, the final positioning result will be made more accurate.

In some embodiments, before step 220, the positioning method 20 can further include:
250 - receiving identifier ID of a terminal that supports sending positioning reference signals as sent by the core network equipment.

Then step 220 is specifically: receiving the positioning reference signal sent by the terminal to which the identifier ID corresponds according to the configuration information.

In some embodiments, the positioning method 20 can further include:
260 - sending the geographical position to the core network equipment.

In another embodiment, step 230 can include:
233 - measuring arrival time differences between the positioning reference signals sent by the various transmitting ends; and
234 - sending a measurement result and a corresponding time stamp to the core network equipment, so as to facilitate the core network equipment to determine the geographical position of the terminal being positioned, wherein the measurement result includes arrival time differences between different positioning reference signals and corresponding positioning reference signal IDs.

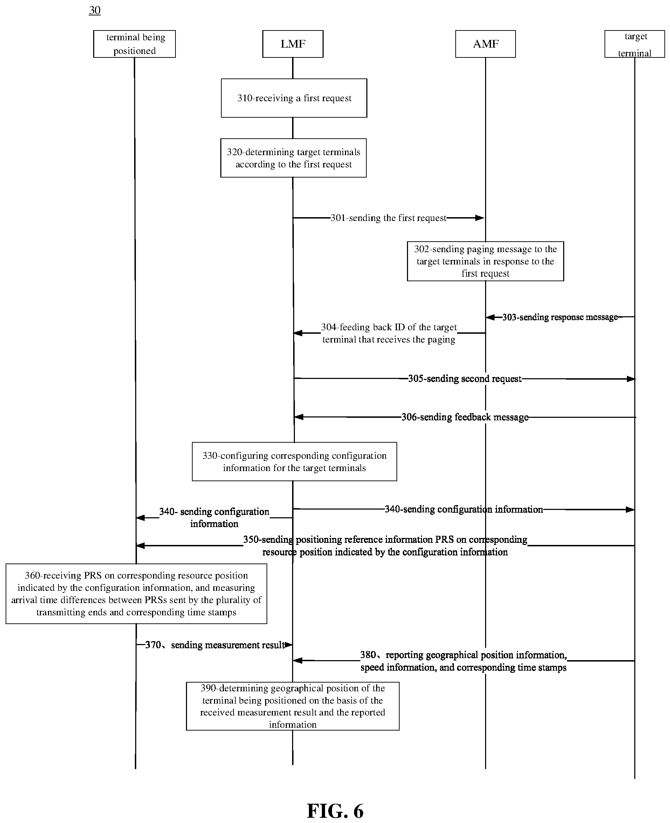

The technical solution of a positioning method provided by the embodiments of the present disclosure has been described above in conjunction with Figs. 3 to 5 and from the perspectives of the core network equipment and the terminal being positioned, respectively, what follows will be described in detail an implementation process of a positioning method provided by an embodiment of the present disclosure in conjunction with Figs. 6 to 8.

As shown in Fig. 6, it is a view illustrating the interaction process of data/signaling of the positioning method provided by an embodiment of the present disclosure. The positioning method 30 includes the following steps:
310 - LMF receives a first request (such as a positioning service request).

Specifically, LMF receives the first request from a positioning terminal, the first request carries identification information of a terminal being positioned, for requesting the position information of the terminal being positioned, and can indicate, and can also not indicate, that the terminal being positioned is performing a positioning service. The positioning terminal is a terminal that requests geographical position of the terminal being positioned.

As should be additionally noted, after having received the first request, LMF can choose to set up the corresponding QoS index requirement according to the service type of the first request, such as positioning accuracy requirement, and positioning completeness requirement, etc.

320 - LMF determines target terminals according to the first request.

Specifically, in this embodiment, it is possible to base on the identification information of the terminal being positioned carried in the first request to determine the base station which the terminal being positioned served by, and then to determine terminals served by the base station and terminals served by a base station that is adjacent to the base station as the target terminals.

330 - LMF configures corresponding configuration information for the target terminals.

Specifically, in this embodiment, it is possible to configure identical configuration information for the determined target terminals, for instance, the target terminals are given identical PRS resource, i.e., the time domain, frequency domain, and space domain resources of the PRSs sent by the various target terminals can be identical.

As should be noted, when resources of the positioning reference signals PRSs as sent are configured, this should be proceeded in accordance with the resources in the positioning reference signal resource pool sent by the base station.

Under some circumstances, before step 330, LMF can further select the target terminals, for instance, terminals having the capability to send PRSs are selected out for sending of the PRSs. Specifically, the following steps can be included:
301 - LMF send a first request to the core network equipment AMF, the first request can carry identifier IDs of target terminals to request the AMF to page the target terminals to enter the positioning process.
302 - in response to the first request, AMF sends a paging message to the target terminals to page for target terminals that can enter the positioning process.
303 - AMF receives response messages of the target terminals that can enter the positioning process, to indicate that the corresponding target terminals receive the paging.
304 - AMF feeds back an ID of a target terminal that receives the paging (marked as: first target terminal) to LMF.
305 - LMF sends a second request to the first target terminal, the second request is configured to enquire whether the first target terminal supports sending the positioning reference signal, and the second request can be an auxiliary positioning request for enquiring whether the first target terminal possesses auxiliary positioning capability.
306 - LMF receives a feedback message sent by the first target terminal, and selects a terminal that supports sending positioning reference signals (marked as: second target terminal) from the first target terminal according to identification information of the first target terminal carried in the feedback message.

Then, step 330 can be:
LMF configures corresponding configuration information for the second target terminal according to parameter information of the positioning reference signal sent by the target terminal carried in the feedback message.

The parameter information includes at least one of the following: bandwidth, frequency information, or duration of the positioning reference signal sent by the target terminal.

For instance, there are three second target terminals, each second target terminal feeds back at least one parameter of bandwidth, frequency information, or duration of the positioning reference signal sent by itself, then each second target terminal is configured with corresponding configuration information according to the parameter of the positioning reference signal sent and fed back by each second target terminal.

Accordingly, precise configuration can be realized on the basis of the capabilities of the target terminals, and sending efficiency of PRSs can be enhanced.

340 - LMF sends well configured configuration information to the terminal being positioned and the target terminals.

As should be noted, if the target terminals are not selected, identical configuration information configured for the various target terminals is sent; if the target terminals are second target terminals obtained by selecting, configuration information corresponding to various second target terminals configured for the various second target terminals is sent.

350 - target terminals send PRSs on the corresponding resource position indicated by the configuration information according to the received configuration information.

360 - the terminal being positioned receives the PRSs sent by the target terminals on the corresponding resource position indicated by the configuration information according to the received configuration information, and measures arrival time differences between different positioning reference signals sent by the plurality of transmitting ends and corresponding time stamps. The transmitting ends include target terminals and base stations which the target terminals served by.

As should be noted, the process for the base station to send positioning reference signals can be realized by a currently existing process; for the sake of brevity, no corresponding description is made in the embodiments of the present disclosure.

370 - the terminal being positioned sends a measurement result to LMF through LPP signaling, and the measurement result includes: arrival time differences between different positioning reference signals and corresponding positioning reference signal IDs.

As should be noted, in this embodiment, for instance, the transmitting ends include target terminals 1, 2, 3, 4 and base station 5, in which 1, 2, 3, 4, 5 are identifiers respectively corresponding to the transmitting ends, then the arrival time differences between different positioning reference signals sent by the plurality of transmitting ends and the corresponding positioning reference signal IDs are as shown in the following Table 1.

**Table 1**

| Transmitting end | Transmitting end ID | Arrival Time Differences between different positioning reference signals | IDs corresponding to Arrival Time Differences between different positioning reference signals |
|---|---|---|---|
| Target Terminal 1 | 1 | t1-t2 | 1, 2 |
| | | t1-t3 | 1, 3 |
| | | t1-t4 | 1, 4 |
| | | t1-t5 | 1, 5 |
| Target Terminal 2 | 2 | t2-t3 | 1, 3 |
| | | t2-t4 | 1, 4 |
| | | t2-t5 | 1, 5 |
| Target Terminal 3 | 3 | t3-t4 | 3, 4 |
| | | t3-t5 | 3, 5 |
| Target Terminal 4 | 4 | t4-t5 | 4, 5 |
| Base Station 5 | 5 | | |

380 - LMF receives geographical position information and corresponding time stamps sent by the target terminals.

Specifically, in this embodiment, LMF can determine target terminals to which the positioning reference signal IDs correspond (marked as: third target terminals) according to the identification information of the target terminals and the positioning reference signal IDs to which the received measurement result corresponds.

For instance, the measurement result is t1-t3, then the corresponding positioning reference signal IDs are 1, 3, so that the corresponding target terminals 1, 3 are determined.

One circumstance is that, geographical position information and corresponding time stamps of the third target terminals are selected from the geographical position information and corresponding time stamps automatically sent by the received target terminals. As should be noted, under such circumstance, as to specifically when LMF receives the geographical position information and corresponding time stamps sent by the target terminals, this is not restricted to whether the third target terminals are determined. Accordingly, execution of step 380 is not restricted to the sequence of the step numbering, as this is merely by way of example here.

Another circumstance is that, a third request can be proactively sent to the third target terminals to request the geographical position information of the third target terminals, thereafter, geographical position information and corresponding time stamps sent by the third target terminals are received. As should be noted, under such circumstance, in order to accurately obtain the relevant information of the required target terminals, corresponding geographical position information and corresponding time stamps should be proactively requested from the third target terminals after the third target terminals have been determined.

390 - LMF determines geographical position of the terminal being positioned on the basis of the received measured result and the sent information.

Specifically, in this embodiment, LMF determines the geographical position of the terminal being positioned according to the arrival time differences between different positioning reference signals as received and corresponding time stamps, and geographical position information and corresponding time stamps of the third target terminals.

As should be noted, having obtained the above information, the LMF can employ the currently existing calculating method to obtain the geographical position of the terminal being positioned. For the sake of brevity, this is not redundantly described in this context.

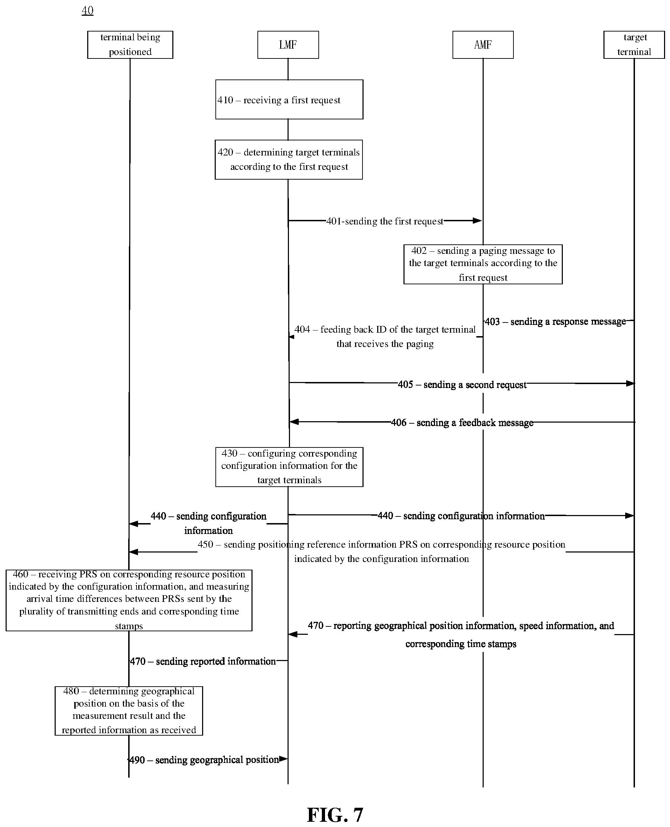

As shown in Fig. 7, it is a view illustrating the interaction process of data/signaling of the positioning method provided by another embodiment of the present disclosure. The positioning method 40 differs from the positioning method 30 in the embodiment shown in Fig. 6 as follows.

The terminal being positioned receives PRSs sent by target terminals on corresponding resource position indicated by configuration information according to the received configuration information, and measures to obtain arrival time differences between different positioning reference signals sent by plurality of transmitting ends and corresponding time stamps, thereafter, the measurement result is not sent to LMF to perform positioning calculation by LMF to determine the position of the terminal being positioned, rather, information coming from LFM is received, and positioning is performed in conjunction with information measured by itself.

In other words, specific implementation process of steps 410 to 460 included in the positioning method 40 shown in Fig. 7 are similar to the specific implementation process of steps 310 to 360 included in the positioning method 30 shown in Fig. 6, for the same of brevity, these are not redundantly described. Detailed description is made below with respect to differences of the two embodiments.

Specifically, after step 460, the method 40 includes:
470 - LMF receives geographical position information, speed information and corresponding time stamps sent by the target terminals, and sends the sent information to the terminal being positioned.

As should be noted here, in this embodiment, execution of step 470 is not restricted to the sequence of the step numbering, as this is merely by way of example here.

480 - the terminal being positioned determines geographical position according to the arrival time differences between different positioning reference signals as sent by plurality of transmitting ends and corresponding time stamps as measured and obtained, and geographical position information, speed information, and corresponding time stamps of the plurality of transmitting ends as received from the LMF.

Specifically, in this embodiment, in order to make the obtained geographical position more accurate, the information for determining geographical position can be processed through the following two modes.

One mode is that, moving transmitting ends are determined according to speed information of various transmitting ends, and/or according to geographical position information at the adjacent timing of the various transmitting ends, thereafter, arrival time differences to which the moving transmitting ends correspond are removed from the arrival time differences, and the geographical position is determined according to the remaining arrival time differences and corresponding time stamps, and geographical position information of corresponding transmitting ends and corresponding time stamps.

In other words, during positioning, if the information (including arrival time differences and corresponding time stamps, and geographical position information and corresponding time stamps) to which moving terminals correspond is not removed, there will be relatively great error in the positioning result.

The second mode is that, time stamps to which arrival time differences correspond are calibrated according to the obtained calibration parameter, and geographical position is thereafter determined according to the arrival time differences, geographical position information, speed information and corresponding time stamps of the various transmitting ends, and the calibrated time stamps to which the arrival time differences correspond.

The calibration parameter can be obtained by the following mode: obtaining first time stamps as received when the plurality of transmitting ends send the positioning reference signals, second time stamps when the plurality of transmitting ends send the positioning reference signals, and a third time stamp when the position calculation is performed for the terminal being positioned; and determining the calibration parameter according to the first time stamps, the second time stamps, and the third time stamp.

In other words, during the positioning process, it is required to calibrate two types of possibly existing time differences, one type is brought about by the terminal being positioned itself, for instance, once there is time difference between the time points of the positioning reference signals sent by the plurality of transmitting ends as received and the time point for positioning calculation, it is required to calibrate the time point for positioning calculation; the other type is brought about by the network, for instance, the times of the positioning reference signals sent by the plurality of transmitting ends are not synchronous, then there must be error in the arrival time differences between the positioning reference signals sent by the various transmitting ends, and this is also required to be calibrated.

As should be noted, after the calibration parameter has been used to process relevant information, the aforementioned first mode can be again configured to remove the information to which moving terminals correspond, and positioning calculation is then performed.

490 - the terminal being positioned sends the obtained geographical position to LMF.

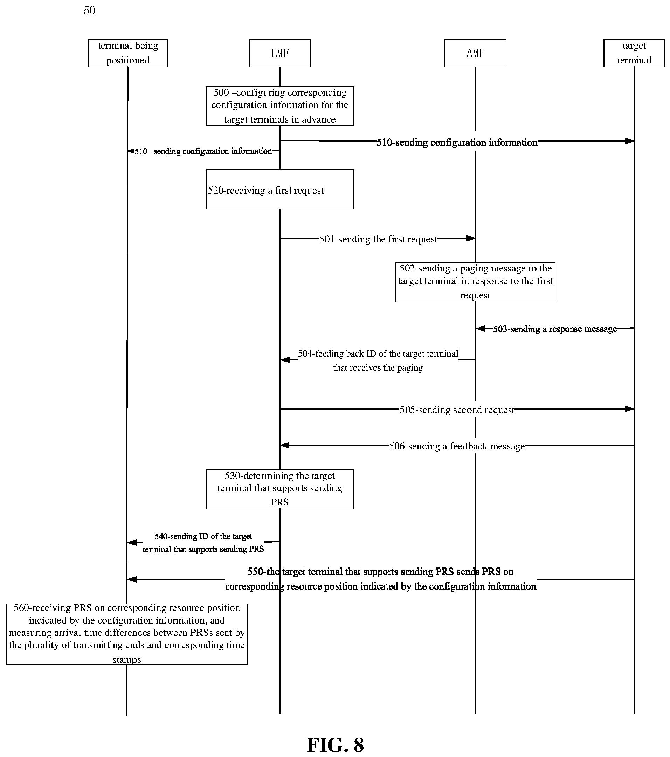

As shown in Fig. 8, it is a view illustrating the interaction process of data/signaling of the positioning method provided by yet another embodiment of the present disclosure. The positioning method 50 includes the following steps:

510 - LMF sends preset configuration information to terminals of the entire network through the mode of broadcasting message.

Specifically, in this embodiment, the specific implementation mode can include the following: LMF directly sends configuration information to various terminals through an LPP message; alternatively, LMF sends the configuration information to a base station, and the base station sends the same to the various terminals through broadcasting message.

Step 500 can be included before step 510: LMF configures in advance configuration information for sending positioning reference signals for terminals of the entire network. Since it is not determined which terminals possess the capability to send PRSs, which terminals do not possess the capability to send PRSs, and it is also not determined what specific capabilities are possessed by the terminals that possess the capability to send PRSs, it is therefore possible to configure identical PRS resource for the terminals of the entire network, that is, time domain, frequency domain and space domain resources for the various terminals to send PRSs can be identical.

As should be noted, the specific configuration of PRS resources should be proceeded in accordance with the resources in the positioning reference signal resource pool as sent by the base station.

520 - LMF receives a first request (for instance, a positioning service request).

Specifically, LMF receives the first request from the positioning terminal, the first request carries identification information of the terminal being positioned for requesting the position information of the terminal being positioned, and can indicate, and can also not indicate, that the terminal being positioned is performing a positioning service.

As should be additionally noted, after having received the first request, LMF can choose to set up the corresponding QoS index requirement according to the service type of the request, such as positioning accuracy requirement, and positioning completeness requirement, etc.

530 - LMF determines target terminals that support sending positioning reference signals PRSs according to the first request.

Under some circumstances, before step 530, the following steps can be included:
501 - LMF sends the first request to the core network equipment AMF, and the first request can carry identifier IDs of target terminals to request AMF to page the target terminals to enter the positioning process.
502 - in response to the first request, AMF sends a paging message to the target terminals to page for the target terminals that can enter the positioning process.
503 - AMF receives response messages sent by target terminals that can enter the positioning process to indicate that corresponding target terminals receive the paging.
504 - AMF feeds back to LMF IDs of the target terminals (marked as: first target terminals) that receive the paging.
505 - LMF sends a second request to the first target terminals, the second request is configured to enquire whether the first target terminals support sending positioning reference signals, and the second request can be an auxiliary positioning request for enquiring whether the first target terminals possess auxiliary positioning capability.
506 - LMF receives feedback messages sent by the first target terminals, the feedback messages carry identification information of the first target terminals.

Then, step 530 can be that:
LMF selects target terminals (marked as: second target terminals) that support sending positioning reference signals from the first target terminals according to identification information of the first target terminals carried in the feedback messages.

540 - LMF sends identifier IDs of the second target terminals to the terminal being positioned.

550 - the second target terminals send PRSs on corresponding resource position indicated by the configuration information according to the received configuration information.

560 - the terminal being positioned receives PRSs sent by the second target terminals on the corresponding resource position indicated by the configuration information according to the received configuration information, and measures arrival time differences between different positioning reference signals sent by the plurality of transmitting ends and corresponding time stamps. The transmitting ends include target terminals and base stations which the target terminals served by.

As should be understood, in this embodiment, after the terminal being positioned receives PRSs sent by the target terminals on the corresponding resource position indicated by the configuration information according to the received configuration information, and measures arrival time differences between different positioning reference signals sent by the plurality of transmitting ends and corresponding time stamps, the position of the terminal being positioned should be determined, and this can be realized by two modes.

One mode is to send the measurement result to LMF, and LMF performs positioning calculation to determine the position of the terminal being positioned. The specific implementation process of this mode can be inferred from the implementation process of steps 370 to 390 included in the positioning method 30 as shown in Fig. 6, for the sake of brevity, this is not redundantly described in this context.

Another mode is that the terminal being positioned receives information from LFM, and positions on its own initiative in conjunction with information measured by itself. The specific implementation process of this mode can be inferred from the implementation process of steps 470 to 490 included in the positioning method 40 as shown in Fig. 7, for the sake of brevity, this is not redundantly described in this context.

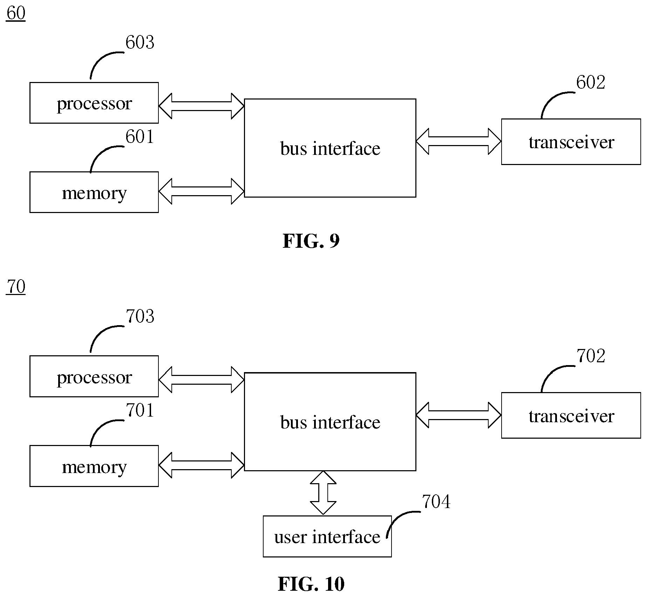

Based on the same inventive conception, an embodiment of the present disclosure provides a core network equipment, as shown in Fig. 9, the core network equipment 60 includes a memory 601, a transceiver 602, and a processor 603.

The memory 601 is configured to store a computer program.

The transceiver 602 is configured to receive a first request under control of the processor 603, wherein the first request is configured to request position information of a terminal being positioned, and to send configuration information to the terminal being positioned and target terminals according to the first request, wherein the configuration information is configured to indicate the target terminals to send positioning reference signals according to the configuration information, and to indicate the terminal being positioned to receive the positioning reference signals according to the configuration information, the positioning reference signal is used to locate the terminal being positioned.

The processor 603 is configured to read the computer program in the memory 601 and to perform control of the transceiver.

In some embodiments, the processor is specifically configured to determine target terminals that send the positioning reference signals according to identification information of the terminal being positioned carried in the first request, and to configure corresponding configuration information for the target terminals.

The transceiver is specifically configured to send configured configuration information to the terminal being positioned and the target terminals under control of the processor.

In some other embodiments, the processor is specifically configured to determine a base station which the terminal being positioned served by according to identification information of the terminal being positioned, and to determine terminals served by the base station and terminals served by a base station adjacent to the base station as the target terminals.

In another embodiment, the processor is specifically configured to select a terminal that supports sending positioning reference signals from the target terminals, and to configure corresponding configuration information for the terminal that supports sending positioning reference signals.

Reference can be made to the positioning method 10 provided in the foregoing embodiment for contents not described in detail with respect to the core network equipment 60 provided by the embodiment of the present disclosure, the core network equipment 60 provided by the embodiment of the present disclosure achieves the same advantageous effects as achievable by the positioning method 10 provided in the foregoing embodiment, and these are not redundantly described in this context.

As should be understood, in the above embodiment, the bus framework in Fig. 9 can subsume any number of interconnected buses and bridges, and these are linked together through one or more processor(s) represented by processor 603 and various circuits of memories represented by memory 601. The bus framework can further link together such various other circuits as peripheral equipment, stabilizers and power management circuits, etc., as all these are publicly known in this field of technology, they are not further described in this paper. Bus interfaces supply interfaces. Transceiver 602 can be a plurality of elements, namely including a transmitting end and a receiver, and provides units communicative with other devices on transmission media, and these transmission media include wireless channels, wired channels, and optical cables, etc. Processor 603 is responsible for managing the bus framework and routine processing, and memory 601 can store data used by processor 603 when operations are being performed.

Processor 603 can be a central processing unit (CPU), an application specific integrated circuit (ASIC), a field-programmable gate array, (FPGA) or a complex programmable logic device (CPLD), and the processor can also be embodied as a multi-core framework.

Based on the same inventive conception, an embodiment of the present disclosure provides a core network equipment, the core network equipment includes a memory, a transceiver, and a processor.

The memory is configured to store a computer program.

The transceiver is configured to send preset configuration information to target terminals under control of a processor, wherein the configuration information is configured to indicate the target terminals to send positioning reference signals according to the configuration information, to receive a first request, wherein the first request is configured to request position information of a terminal being positioned, and to send the configuration information to the terminal being positioned according to the first request, wherein the configuration information is configured to indicate the terminal being positioned to receive the positioning reference signal according to the configuration information, the positioning reference signal is used to locate the terminal being positioned.

The processor is configured to read the computer program in the memory and to perform control of the transceiver.

Reference can be made to the positioning method 100 provided in the foregoing embodiment for contents not described in detail with respect to the core network equipment provided by the embodiment of the present disclosure, the core network equipment provided by the embodiment of the present disclosure achieves the same advantageous effects as achievable by the positioning method 100 provided in the foregoing embodiment, and these are not redundantly described in this context.

In addition, the structure of the core network equipment in this embodiment can be referred to the structure as shown in Fig. 9.

Based on the same inventive conception, an embodiment of the present disclosure provides a terminal, as shown in Fig. 10, the terminal 70 includes a memory 701, a transceiver 702 and a processor 703.

Memory 701 is configured to store a computer program.

Transceiver 702 is configured to receive configuration information sent by a core network equipment under control of the processor 703, and to receive positioning reference signals sent by a plurality of transmitting ends according to the configuration information, wherein the plurality of transmitting ends include target terminals and a base station which the target terminals served by.

Processor 703 is configured to read the computer program in the memory 701 and to perform control of the transceiver, and to position according to the positioning reference signals received by the transceiver.

In some embodiments, the processor is specifically configured to measure arrival time differences between different positioning reference signals sent by various transmitting ends; and to determine geographical position according to the arrival time differences and corresponding time stamps, and geographical position information, speed information and corresponding time stamps of the plurality of transmitting ends as received from the core network equipment.

In some other embodiments, the processor is specifically configured to measure arrival time differences between different positioning reference signals sent by various transmitting ends.

The transceiver is further configured to send a measurement result and corresponding time stamps to the core network equipment, so that the core network equipment determines geographical position of the terminal being positioned, wherein the measurement result includes arrival time differences between the positioning reference signals and corresponding positioning reference signal IDs.

Reference can be made to the positioning method 20 provided in the foregoing embodiment for contents not described in detail with respect to the terminal 70 provided by the embodiment of the present disclosure, the terminal 70 provided by the embodiment of the present disclosure achieves the same advantageous effects as achievable by the positioning method 20 provided in the foregoing embodiment, and these are not redundantly described in this context.

As should be understood, in the above embodiment, the bus framework in Fig. 10 can subsume any number of interconnected buses and bridges, and these are linked together through one or more processor(s) represented by processor 703 and various circuits of memories represented by memory 701. The bus framework can further link together such various other circuits as peripheral equipment, stabilizers and power management circuits, etc., as all these are publicly known in this field of technology, they are not further described in this paper. Bus interfaces supply interfaces. Transceiver 702 can be a plurality of elements, namely including a transmitting end and a receiver, and provides units communicative with other devices on transmission media, and these transmission media include wireless channels, wired channels, and optical cables, etc. With respect to different user equipment, user interface 704 can further be an interface capable of internally or externally connecting to required equipment, and the connected equipment include, but are not limited to, a small keyboard, a display, a speaker, a microphone, an operating lever, etc.

Processor 703 is responsible for managing the bus framework and routine processing. Memory 702 can store data used by processor 703 when operations are being performed.

Optionally, processor 703 can be a central processing unit (CPU), an application specific integrated circuit (ASIC), a field-programmable gate array (FPGA) or a complex programmable logic device (CPLD), and the processor can also be embodied as a multi-core framework.

By invoking the computer program stored by the memory, the processor is configured to execute any method provided by the embodiments in accordance with an executable instruction as obtained. The processor and the memory can also be arranged in physical separation.

Based on the same inventive conception, an embodiment of the present disclosure provides a core network equipment, and the core network equipment includes a receiving unit and a sending unit.

The receiving unit is configured to receive a first request, wherein the first request is configured to request position information of a terminal being positioned.

The sending unit is configured to send configuration information to the terminal being positioned and target terminals according to the first request, wherein the configuration information is configured to indicate the target terminals to send positioning reference signals according to the configuration information, and to indicate the terminal being positioned to receive the positioning reference signals according to the configuration information, the positioning reference signal is used to locate the terminal being positioned.

In some embodiments, the core network equipment further includes a processing unit configured to determine target terminals that send positioning reference signals according to identification information of the terminal being positioned carried in the first request, and to configure corresponding configuration information for the target terminals.

Then, the sending unit is configured to send configured configuration information to the terminal being positioned and the target terminals.

Specifically, in this embodiment, the processing unit is specifically configured to determine a base station which the terminal being positioned served by according to identification information of the terminal being positioned, and to determine terminals served by the base station and terminals served by a base station adjacent to the base station as the target terminals.

In some embodiments, the processing unit is further configured to select terminals that support sending positioning reference signals from the target terminals, and to configure corresponding configuration information for the terminals that support sending positioning reference signals.

Specifically, in this embodiment, the sending unit is specifically configured to send a second request to the target terminals, and the second request is configured to enquire whether the target terminals support sending positioning reference signals.

The processing unit is configured to select terminals that support sending positioning reference signals from the target terminals according to identification information of the target terminals carried in the feedback message of the target terminals as received.

Specifically, in this embodiment, corresponding configuration information is configured for the terminals that support sending positioning reference signals according to parameter information of the positioning reference signals sent by the target terminals as carried in the feedback message.

The parameter information includes at least one of the following: bandwidth, frequency information, or duration of the positioning reference signal sent by the target terminals.

In some embodiments, the core network equipment further includes a receiving unit configured to receive measure result and a corresponding time stamp sent by the terminal being positioned, and the measure result includes arrival time differences between the positioning reference signals and corresponding positioning reference signal IDs.

The processing unit is configured to determine at least one corresponding target terminal according to the positioning reference signal IDs to which the measurement result corresponds and the identification information of the target terminals; to obtain geographical position information sent by the at least one target terminal and a corresponding time stamp; and to determine a geographical position of the terminal being positioned according to the measurement result and the corresponding time stamp, and the geographical position information and the corresponding time stamp.

Specifically, in this embodiment, the processing unit is specifically configured to select geographical position information and a corresponding time stamp of the at least one target terminal from the geographical position information and corresponding time stamps sent by the target terminals as received according to identification information of the at least one target terminal; alternatively, the sending unit is specifically configured to send a third request to the at least one target terminal to request the geographical position information of the at least one target terminal.

The receiving unit is specifically configured to receive the geographical position information and the corresponding time stamp sent by the at least one target terminal.

In some embodiments, the receiving unit is further configured to receive geographical position sent by the terminal being positioned, and the sent geographical position is obtained by the terminal being positioned via performing positioning according to the received positioning reference signals.

In the above various embodiments, the configuration information can include, but is not limited to include, at least one of the following:
a sending pattern of the positioning reference signal;
indication information of time domain resource, frequency domain resource, or space domain resource of the positioning reference signal; or
identifier ID of each terminal that sends the positioning reference signal.

The sending pattern includes periodical, semi-continual, or non-periodical.

Indication information of time domain resource of a semi-continual positioning reference signal is configured to indicate a time point of starting to send, duration, and interval period to send of the positioning reference signal, or a time point of starting to send, a time point of ending to send, and interval period to send of the positioning reference signal.

Indication information of time domain resource of a periodical positioning reference signal is configured to indicate a sending period of the positioning reference signal.

Indication information of time domain resource of a non-periodical positioning reference signal is configured to indicate a time point of starting to send, duration, and a time point of ending to send of the positioning reference signal.

Based on the same inventive conception, an embodiment of the present disclosure provides a core network equipment, and the core network equipment includes a sending unit and a receiving unit.

The sending unit is configured to send preset configuration information to target terminals, and the configuration information is configured to indicate the target terminals to send positioning reference signals according to the configuration information.

The receiving unit is configured to receive a first request, and the first request is configured to request position information of a terminal being positioned.

The sending unit is further configured to send the configuration information to the terminal being positioned according to the first request, and the configuration information is configured to indicate the terminal being positioned to receive the positioning reference signals according to the configuration information, the positioning reference signal is used to locate the terminal being positioned.

In some embodiments, the core network equipment further includes a processing unit configured to select terminals that support sending positioning reference signals from target terminals.

The sending unit is further configured to send identifier IDs of the terminals that support sending positioning reference signals to the terminal being positioned, so that the terminal being positioned receives the positioning reference signals sent by the terminals to which the identifier IDs correspond according to the configuration information.

Specifically, in this embodiment, the sending unit is specifically configured to send a second request to the target terminals, and the second request is configured to enquire whether the target terminals support sending positioning reference signals.

The processing unit is specifically configured to select terminals that support sending positioning reference signals from the target terminals according to identification information of the target terminals carried in a feedback message of the target terminals as received.

Based on the same inventive conception, an embodiment of the present disclosure provides a terminal, and the terminal includes a receiving unit and a positioning unit.

The receiving unit is configured to receive configuration information sent by a core network equipment, and to receive positioning reference signals sent by a plurality of transmitting ends according to the configuration information, wherein the plurality of transmitting ends include target terminals and a base station which the target terminals served by.

The positioning unit is configured to position a terminal being positioned according to the positioning reference signals.

In some embodiments, the positioning unit is specifically configured to measure arrival time differences between different positioning reference signals sent by the various transmitting ends, and to determine geographical position according to the arrival time differences and corresponding time stamps, and geographical position information, speed information and corresponding time stamps of the plurality of transmitting ends as received from the core network equipment.

Specifically, in this embodiment, the positioning unit is specifically configured to perform a calibrating process on the time stamps to which the arrival time differences correspond according to an obtained calibration parameter, and to determine geographical position according to the arrival time differences, the geographical position information, speed information and corresponding time stamps of the various transmitting ends, and the calibrated time stamps to which the arrival time differences correspond.

The calibration parameter can be determined and obtained on the basis of first time stamps when the plurality of transmitting ends send the positioning reference signals, second time stamps when the plurality of transmitting ends send the positioning reference signals, and a third time stamp when the terminal being positioned is performing positioning calculation.

In some embodiments, the positioning unit is specifically configured to:
determine moving transmitting ends according to speed information of the various transmitting ends, and/or according to geographical position information of adjacent timing of the various transmitting ends;
to remove arrival time differences to which the moving transmitting ends corresponding from the arrival time differences; and
to determine geographical position according to the remaining arrival time differences and corresponding time stamps, and geographical position information and corresponding time stamps of corresponding transmitting ends.

In some embodiments, the receiving unit is further configured to:
receive identifier IDs of terminals that support sending positioning reference signals as sent by the core network equipment; and
to receive positioning reference signals sent by the terminals to which the identifier IDs correspond according to the configuration information.

In some embodiments, there is further included a sending unit configured to send geographical position to the core network equipment.

In some embodiments, the positioning unit is specifically configured to measure arrival time differences between different positioning reference signals sent by the various transmitting ends.

The sending unit is further configured to send a measurement result and corresponding time stamps to the core network equipment, so that the core network equipment determines geographical position of the terminal being positioned, wherein the measurement result includes arrival time differences between different positioning reference signals and corresponding positioning reference signal IDs.

In the above various embodiments, the configuration information can include, but is not limited to include, at least one of the following:
a sending pattern of the positioning reference signal;
indication information of time domain resource, frequency domain resource, or space domain resource of the positioning reference signal; or
identifier ID of each terminal that sends the positioning reference signal.

The sending pattern includes periodical, semi-continual, or non-periodical.

Indication information of time domain resource of a semi-continual positioning reference signal is configured to indicate a time point of starting to send, duration, or interval period to send of the positioning reference signal, or a time point of starting to send, a time point of ending to send, and interval period to send of the positioning reference signal.

Indication information of time domain resource of a periodical positioning reference signal is configured to indicate a sending period of the positioning reference signal.

Indication information of time domain resource of a non-periodical positioning reference signal is configured to indicate a time point of starting to send, duration, and a time point of ending to send of the positioning reference signal.

In addition, an embodiment of the present disclosure further provides a computer-readable storage medium, the computer-readable storage medium stores thereon a computer program that, when it is operative on a computer, enables the computer to execute the corresponding contents in the embodiment to which the aforementioned positioning method 10, or the positioning method 100, or the positioning method 20 corresponds. In comparison with prior-art technology, by the positioning method provided by the embodiments of the present disclosure, not only the base station can send positioning reference signals, but some terminals served by the base station can also send positioning reference signals through PC5 interface, so that density of positioning reference signals in the network as well as irrelevancy of geometric distribution of the sent positioning signals are enhanced, and positioning accuracy of the terminal being positioned is hence enhanced, whereby the positioning accuracy requirement under the Sidelink scenario can be satisfied.

As should be noted, the divisions into units in the embodiments of the present disclosure are merely exemplary in nature, as they are merely logically functional divisions, and there might as well be other division modes during actual implementation. In addition, the various functional units in the various embodiments of the present disclosure can be integrated into a processing unit, can also be physically existent as various units, and can as well be integrated into one unit by two or more units. The aforementioned integrated units can be either realized in the form of hardware, or realized in the form of software functional units.

If the integrated units are realized in the form of software functional units and sold or used as independent products, they can be stored in a processor readable storage medium. Based on such understanding, essentially the technical solution of the present disclosure or the portion that makes contribution over prior-art technology or the entire or partial technical solution can be embodied in the form of a software product, the computer software product is stored in a storage medium and subsumes plural instructions to enable a computer equipment (that can be a personal computer, a server, or a network equipment, etc.) or a processor to execute the entire or partial steps of the various embodiments of the present disclosure. The aforementioned storage medium include such media capable of storing program codes as a U disk, a mobile hard disk, a read-only memory (ROM), a random access memory (RAM), a magnetic disk or an optical disk, etc.

As should be clear to persons skilled in the art, the embodiments of the present disclosure can be provided as methods, systems, or computer program products. Accordingly, the present disclosure can be embodied in the form of a complete hardware embodiment, a complete software embodiment, or an embodiment combining software with hardware. Moreover, the present disclosure can be embodied in the form of a computer program product implemented on one or more computer available storage media (including, but not limited to, magnetic disk memory, optical memory, etc.) containing computer available program codes.

The present disclosure is described with reference to flowcharts and/or block diagrams according to methods, equipment (systems), and computer program products of the embodiments of the present disclosure. As should be understood, each process and/or block in the flowcharts and/or block diagrams, and combinations of processes and/or blocks in the flowcharts and/or block diagrams can be realized by computer executable instructions. These computer executable instructions can be provided to the processor of a general computer, a dedicated computer, an embedded processor or other programmable data processing equipment to generate a machine, to enable the instructions executed through the computer or the processor of other programmable data processing equipment to generate a device that realizes functions designated by one process or a plurality of processes of the flowcharts and/or one block or a plurality of blocks of the block diagrams.

These processor executable instructions can also be stored in a processor readable memory capable of guiding the computer and the other programmable data processing equipment to operate in specific modes, enabling instructions stored in the processor readable memory to generate a product including an instructing device, and the instructing device realizes functions designated by one process or a plurality of processes of the flowcharts and/or one block or a plurality of blocks of the block diagrams.

These processor executable instructions can also be loaded unto the computer or the other programmable data processing equipment, enabling the execution of a series of operative steps on the computer or the other programmable equipment to generate processing realized by the computer, so that the instructions executed on the computer or the other programmable equipment provide steps that realize functions designated by one process or a plurality of processes of the flowcharts and/or one block or a plurality of blocks of the block diagrams.

What the above describes is merely directed to partial embodiments of the present invention. As should be pointed out, to persons ordinarily skilled in the art may further make various improvements and modifications without departing from the principle of the present invention, and these improvements and modifications should also be regarded as within the protection scope of the present invention.

## Claims

1. A positioning method, performed by a core network equipment, comprising:
receiving a first request, wherein the first request is configured to request position information of a terminal being positioned; and
sending configuration information to the terminal being positioned and a target terminal according to the first request, wherein the configuration information is configured to indicate the target terminal to send a positioning reference signal according to the configuration information, and to indicate the terminal being positioned to receive the positioning reference signal according to the configuration information, the positioning reference signal is used to locate the terminal being positioned.

2. The positioning method according to claim 1, wherein sending configuration information to the terminal being positioned and a target terminal according to the first request comprises:
determining the target terminal to send the positioning reference signal according to identification information of the terminal being positioned carried in the first request;
configuring configuration information for the target terminal; and
sending the configured configuration information to the terminal being positioned and the target terminal.

3. The positioning method according to claim 2, wherein determining the target terminal to send the positioning reference signal according to identification information of the terminal being positioned carried in the first request comprises:
determining a base station which the terminal being positioned served by according to the identification information of the terminal being positioned; and
determining terminal(s) served by the base station and terminal(s) served by a base station adjacent to the base station as the target terminals.

4. The positioning method according to claim 2, wherein, before configuring configuration information for the target terminal, the method further comprises:
selecting a terminal that supports sending positioning reference signals from the target terminals; and
wherein configuring configuration information for the target terminal comprises:
configuring configuration information for the terminal that supports sending positioning reference signals.

5. The positioning method according to claim 4, wherein selecting a terminal that supports sending positioning reference signals from the target terminals comprises:
sending a second request to the target terminals, wherein the second request is configured to enquire whether the target terminals support sending positioning reference signals; and
selecting, from the target terminals, the terminal that supports sending positioning reference signals according to identification information of the target terminals carried in a received feedback message.

6. The positioning method according to claim 5, wherein the feedback message further carries parameter information of the positioning reference signal sent by the target terminal, and configuring corresponding configuration information for the terminal that supports sending positioning reference signals comprises:
configuring, according to the parameter information, configuration information for the terminal that supports sending positioning reference signals.

7. The positioning method according to claim 6, wherein the parameter information comprises at least one of the following:
bandwidth, frequency information, or duration of the positioning reference signal sent by the target terminal.

8. The positioning method according to anyone of claims 1 to 7, wherein the method further comprises:
receiving a measurement result sent by the terminal being positioned and a corresponding time stamp, wherein the measurement result comprises: an arrival time difference between different positioning reference signals; corresponding positioning reference signal IDs;
determining at least one corresponding target terminal according to the positioning reference signal IDs which the measurement result corresponds to and the identification information of the target terminals;
obtaining geographical position information sent by the at least one target terminal and a corresponding time stamp; and
determining a geographical position of the terminal being positioned according to the measurement result and the corresponding time stamp, and the geographical position information and the corresponding time stamp.

9. The positioning method according to claim 8, wherein obtaining geographical position information sent by the at least one target terminal and a corresponding time stamp comprises:
selecting, according to the identification information of the at least one target terminal, geographical position information and a corresponding time stamp of the at least one target terminal from geographical position information and corresponding time stamps sent by the target terminals as received;
or,
sending a third request to the at least one target terminal, wherein the third request is configured to request geographical position information of the at least one target terminal; and
receiving geographical position information sent by the at least one target terminal and a corresponding time stamp.

10. The positioning method according to anyone of claims 1 to 7, wherein the method further comprises:
receiving geographical position sent by the terminal being positioned, wherein the sent geographical position is obtained by the terminal being positioned via performing positioning according to a received positioning reference signal.

11. The positioning method according to anyone of claims 1 to 7, wherein the configuration information includes at least one of the following:
a sending pattern of the positioning reference signal;
indication information of time domain resource, frequency domain resource, or space domain resource of the positioning reference signal; or
identifier ID of each terminal that sends the positioning reference signal; wherein
the sending pattern includes periodical, semi-continual, or non-periodical;
indication information of time domain resource of a semi-continual positioning reference signal is configured to indicate a time point of starting to send, duration, and interval period to send of the positioning reference signal, or a time point of starting to send, a time point of ending to send, and interval period to send of the positioning reference signal;
indication information of time domain resource of a periodical positioning reference signal is configured to indicate a sending period of the positioning reference signal; and
indication information of time domain resource of a non-periodical positioning reference signal is configured to indicate a time point of starting to send, duration, and a time point of ending to send of the positioning reference signal.

12. A positioning method, performed by a core network equipment, comprising:
sending preset configuration information to target terminals, wherein the configuration information is configured to indicate the target terminals to send a positioning reference signal according to the configuration information;
receiving a first request, wherein the first request is configured to request position information of a terminal being positioned; and
sending the configuration information to the terminal being positioned according to the first request, wherein the configuration information is configured to indicate the terminal being positioned to receive the positioning reference signal according to the configuration information, the positioning reference signal is used to locate the terminal being positioned.

13. The method according to claim 12, wherein the method further comprises:
selecting a terminal that supports sending positioning reference signals from the target terminals; and
sending identifier ID of the terminal that supports sending positioning reference signals to the terminal being positioned.

14. The positioning method according to claim 13, wherein selecting a terminal that supports sending positioning reference signals from the target terminals comprises:
sending a second request to the target terminals, wherein the second request is configured to enquire whether the target terminals support sending positioning reference signals; and
selecting the terminal that supports sending positioning reference signals from the target terminals according to identification information of the target terminals carried in a received feedback message.

15. A positioning method, performed by a terminal being positioned, comprising:
receiving configuration information sent by a core network equipment;
receiving positioning reference signals sent by a plurality of transmitting ends according to the configuration information, wherein the plurality of transmitting ends comprise target terminals and a base station which the target terminals severed by; and
positioning according to the positioning reference signals.

16. The method according to claim 15, wherein positioning according to the positioning reference signals comprises:
measuring arrival time differences between different positioning reference signals sent by the plurality of transmitting ends; and
determining geographical position according to the arrival time differences and corresponding time stamps, and geographical position information, speed information and corresponding time stamps of the plurality of transmitting ends received from the core network equipment.

17. The method according to claim 16, wherein, before determining geographical position according to the arrival time differences and corresponding time stamps, and geographical position information, speed information and corresponding time stamps of the plurality of transmitting ends received from the core network equipment, the method further comprises:
obtaining a calibration parameter; and wherein
determining geographical position according to the arrival time differences and corresponding time stamps, and geographical position information, speed information and corresponding time stamps of the plurality of transmitting ends received from the core network equipment comprises:
performing a calibrating process on the time stamps to which the arrival time differences correspond according to the calibration parameter; and
determining geographical position according to the arrival time differences, geographical position information, speed information and corresponding time stamps of the various transmitting ends, and the calibrated time stamps to which the arrival time differences correspond.

18. The method according to claim 17, wherein obtaining a calibration parameter comprises:
obtaining received first time stamps when the plurality of transmitting ends send the positioning reference signals, second time stamps when the plurality of transmitting ends send the positioning reference signals, and a third time stamp when the position calculation is performed for the terminal being positioned; and
determining the calibration parameter according to the first time stamps, the second time stamps, and the third time stamp.

19. The method according to claim 16, wherein determining geographical position according to the arrival time differences and corresponding time stamps, and geographical position information, speed information and corresponding time stamps of the plurality of transmitting ends received from the core network equipment comprises:
determining moving transmitting ends according to the speed information of the various transmitting ends, and/or according to geographical position information of adjacent timing of the various transmitting ends;
removing arrival time differences to which the moving transmitting ends correspond from the arrival time differences; and
determining the geographical position according to the remaining arrival time differences and corresponding time stamps, and geographical position information and corresponding time stamps of the corresponding transmitting ends.

20. The method according to anyone of claims 16 to 19, wherein, before receiving positioning reference signals sent by a plurality of transmitting ends according to the configuration information, the method further comprises:
receiving identifier (ID) of a terminal that supports sending positioning reference signals sent by the core network equipment;
then, receiving positioning reference signals sent by a plurality of transmitting ends according to the configuration information comprises:
receiving the positioning reference signals sent by the terminal which the identifier ID corresponds to according to the configuration information.

21. The method according to anyone of claims 16 to 19, wherein the method further comprises:
sending the geographical position to the core network equipment.

22. The method according to claim 15, wherein positioning according to the positioning reference signal comprises:
measuring arrival time differences between the positioning reference signals sent by the various transmitting ends; and
sending a measurement result and a corresponding time stamp to the core network equipment, so that the core network equipment determines the geographical position of the terminal being positioned, wherein the measurement result comprises arrival time differences between different positioning reference signals and corresponding positioning reference signal IDs.

23. The positioning method according to anyone of claims 15 to 19, wherein the configuration information comprises at least one of the following:
a sending pattern of the positioning reference signal;
indication information of time domain resource, frequency domain resource, or space domain resource of the positioning reference signal; and
identifier (ID) of each terminal that sends the positioning reference signal;
wherein the sending pattern comprises periodical, semi-continual, or non-periodical;
indication information of time domain resource of a semi-continual positioning reference signal is configured to indicate a time point of starting to send, duration, and interval period to send of the positioning reference signal, or a time point of starting to send, a time point of ending to send, and interval period to send of the positioning reference signal;
indication information of time domain resource of a periodical positioning reference signal is configured to indicate a sending period of the positioning reference signal; and
indication information of time domain resource of a non-periodical positioning reference signal is configured to indicate a time point of starting to send, duration, and a time point of ending to send of the positioning reference signal.

24. A core network equipment, comprising:
a memory, configured to store a computer program;
a transceiver, configured to receive a first request under control of a processor, wherein the first request is configured to request position information of a terminal being positioned, and to send configuration information to the terminal being positioned and target terminals according to the first request, wherein the configuration information is configured to indicate the target terminals to send positioning reference signals according to the configuration information, and to indicate the terminal being positioned to receive the positioning reference signals according to the configuration information, the positioning reference signal is used to locate the terminal being positioned; and
a processor, configured to read the computer program in the memory and to perform control of the transceiver.

25. The core network equipment according to claim 24, wherein the processor is specifically configured to determine target terminals to send the positioning reference signals according to identification information of the terminal being positioned carried in the first request, and to configure configuration information for the target terminals; and
the transceiver is specifically configured to send configured configuration information to the terminal being positioned and the target terminals under control of the processor.

26. The core network equipment according to claim 25, wherein the processor is specifically configured to determine a base station which the terminal being positioned served by according to identification information of the terminal being positioned, and to determine terminals served by the base station and terminals served by a base station adjacent to the base station as the target terminals.

27. The core network equipment according to claim 25, wherein the processor is specifically configured to select a terminal that supports sending positioning reference signals from the target terminals, and to configure configuration information for the terminal that supports sending positioning reference signals.

28. A core network equipment, comprising:
a memory, configured to store a computer program;
a transceiver, configured to send preset configuration information to target terminals under control of a processor, wherein the configuration information is configured to indicate the target terminals to send positioning reference signals according to the configuration information, to receive a first request, wherein the first request is configured to request position information of a terminal being positioned, and to send the configuration information to the terminal being positioned according to the first request, wherein the configuration information is configured to indicate the terminal being positioned to receive the positioning reference signal according to the configuration information, the positioning reference signal is used to locate the terminal being positioned; and
a processor, configured to read the computer program in the memory and to perform control of the transceiver.

29. A terminal, comprising:
a memory, configured to store a computer program;
a transceiver, configured to receive configuration information sent by a core network equipment under control of a processor, and to receive positioning reference signals sent by a plurality of transmitting ends according to the configuration information, wherein the plurality of transmitting ends comprise target terminals and a base station which the target terminals served by; and
the processor, configured to read the computer program in the memory and to perform control of the transceiver, and to position according to the positioning reference signals received by the transceiver.

30. The terminal according to claim 29, wherein the processor is specifically configured to measure arrival time differences between different positioning reference signals sent by various transmitting ends; and
to determine geographical position according to the arrival time differences and corresponding time stamps, and geographical position information, speed information and corresponding time stamps of the plurality of transmitting ends received from the core network equipment.

31. The terminal according to claim 29, wherein the processor is specifically configured to measure arrival time differences between different positioning reference signals sent by various transmitting ends; and
the transceiver is further configured to send a measurement result and corresponding time stamps to the core network equipment, so that the core network equipment determines geographical position of the terminal being positioned, wherein the measurement result comprises arrival time differences between the positioning reference signals and corresponding positioning reference signal IDs.

32. A core network equipment, comprising:
a receiving unit, configured to receive a first request, wherein the first request is configured to request position information of a terminal being positioned; and
a sending unit, configured to send configuration information to the terminal being positioned and target terminals according to the first request, wherein the configuration information is configured to indicate the target terminals to send positioning reference signals according to the configuration information, and to indicate the terminal being positioned to receive the positioning reference signals according to the configuration information, the positioning reference signal is used to locate the terminal being positioned.

33. A core network equipment, comprising:
a sending unit, configured to send preset configuration information to target terminals, wherein the configuration information is configured to indicate the target terminals to send positioning reference signals according to the configuration information; and
a receiving unit, configured to receive a first request, wherein the first request is configured to request position information of a terminal being positioned; and wherein
the sending unit is further configured to send the configuration information to the terminal being positioned according to the first request, wherein the configuration information is configured to indicate the terminal being positioned to receive the positioning reference signals according to the configuration information, the positioning reference signal is used to locate the terminal being positioned.

34. A terminal, comprising:
a receiving unit, configured to receive configuration information sent by a core network equipment, and to receive positioning reference signals sent by a plurality of transmitting ends according to the configuration information, wherein the plurality of transmitting ends comprise target terminals and a base station which the target terminals served by; and
a positioning unit, configured to position a terminal being positioned according to the positioning reference signals.

35. A processor readable storage medium, the processor readable storage medium storing thereon a computer program that when executed, causing a processor to perform the positioning method according to anyone of claims 1 to 14, or causing the processor to perform the positioning method according to anyone of claims 15 to 23.
